# EUROPÄISCHE PATENTSCHRIFT

(11) **EP 2 796 002 B1**
(45) Veröffentlichungstag und Bekanntmachung des Hinweises auf die Patenterteilung: **13.09.2017**
(21) Anmeldenummer: 12815673.4
(22) Anmeldetag: 20.12.2012
(51) Int. Cl.: H05B 33/08, H02M 1/42, H02M 3/156

(54) **VERFAHREN UND SCHALTUNGSANORDNUNG ZUM BETRIEB VON LEUCHTMITTELN, MIT VERMEIDUNG VON SCHWEBUNGEN**
METHOD AND CIRCUIT ASSEMBLY FOR OPERATING ILLUMINANTS WHILE AVOIDING BEATS
PROCÉDÉ ET CIRCUITERIE POUR FAIRE FONCTIONNER DES MOYENS D'ÉCLAIRAGE EN ÉVITANT DES INTERFÉRENCES

(30) Priorität: 23.12.2011 DE 102011089840; 09.03.2012 DE 102012203745
(43) Veröffentlichungstag der Anmeldung: 29.10.2014
(73) Patentinhaber: Tridonic GmbH & Co. KG, 6851 Dornbirn (AT)
(72) Erfinder: MITTERBACHER, Andre, A-6850 Dornbirn (AT); MAYRHOFER, Markus, A-6850 Dornbirn (AT)
(74) Vertreter: Rupp, Christian
(86) Internationale Anmeldenummer: PCT/EP2012/076337
(87) Internationale Veröffentlichungsnummer: WO 2013/092832

(56) Entgegenhaltungen:
- EP-A1- 2 302 984
- EP-A2- 2 503 847
- DE-A1-102008 057 333

## Beschreibung

Die Erfindung betrifft ein Verfahren und eine Schaltungsanordnung zum Betrieb von Leuchtmitteln mittels Pulsweitenmodulation. Zur Vermeidung von Schwebungen im sichtbaren Frequenzbereich, welche sich bei Leuchtmitteln, insbesondere LEDs in sichtbaren Helligkeitsschwankungen auswirken, wird die diskret oder kontinuierlich einstellbare Frequenz der Pulsweitenmodulation (PWM) dabei abhängig von einem erfassten Spannungsrippel (Restwelligkeit in der Versorgungsspannung) gewählt.

Herkömmlich wird zur Versorgung von LEDs mittels einer Leistungsfaktor-Korrekturschaltung und eines Glättungskondensators aus einer Netzspannung ein Gleichspannungssignal erzeugt. Dieses Gleichspannungssignal wird durch Pulsweitenmodulation in ein pulsweitenmoduliertes Gleichspannungssignal umgesetzt. Mit dem pulsweitenmodulierten Gleichspannungssignal wird eine Last, z. B. direkt ein LED-Modul, oder eine weitere LED-Konverterstufe betrieben. Das Ausgangssignal des Gleichrichter-Moduls weist dabei eine Restwelligkeit ("Rippel") mit einer Frequenz der doppelten Netzspannung auf.

Auch wenn bspw. für Notlichtbetrieb eine DC-Versorgung vorliegt, kann ein Rippel entstehen, wenn die Taktung der PFC-Schaltung absichtlich zur Verbesserung der EMI-Eigenschaften moduliert wird.

Übliche Frequenzen der Pulsweitenmodulation liegen im Bereich von 100Hz bis 500Hz. Insbesondere, wenn die eingesetzte Frequenz der Pulsweitenmodulation nahe bei der Frequenz der Restwelligkeit des Gleichspannungssignals oder einem ganzzahligen Vielfachen dieser Frequenz liegt, kommt es durch Demodulation zu niederfrequenten Schwebungen. Diese Schwebungen wirken sich bei einem LED-Modul in einer deutlich sichtbaren Helligkeitsschwankung mit der Frequenz der Schwebung, d. h. mit der Differenzfrequenz zwischen der doppelten Netzfrequenz bzw. deren ganzzahligem Vielfachen und der Frequenz der Pulsweitenmodulation aus.

So zeigt die US 2011/0043133 A1 eine Betriebsschaltung zum Betreiben eines LED-Moduls, welche mittels Leistungsfaktorkorrektur aus einer AC-Spannung ein Gleichspannungssignal mit einer Restwelligkeit erzeugt. Dieses Signal wird durch eine Pulsweitenmodulation verarbeitet und zum Betreiben der LEDs eingesetzt. Dabei wird die Frequenz der Pulsweitenmodulation unabhängig von der Netzfrequenz eingestellt. Die dort gezeigte Schaltungsanordnung ist nachteilig, da es zu oben beschriebenen Schwebungen kommen kann.

Der gegenwärtigen Erfindung liegt die Aufgabe zugrunde, ein Verfahren und eine Schaltungsanordnung zu schaffen, welche unabhängig von der eingesetzten Netzfrequenz einen Betrieb von Leuchtmittel ohne das Auftreten von unerwünschten, für das menschliche Auge sichtbaren Helligkeitsschwankungen ermöglichen.

Die Schwankungen durch den Rippel werden also nicht ausgeregelt, sondern es werden Massnahmen getroffen, dass Demodulationsprodukte (Schwebungen) nicht im für das menschliche Auge gut detektierbaren Frequenzbereich auftreten. Die maximale Sensibilität des menschlichen Auges in Sachen Helligkeitsschwankungen besteht bekanntlich bei ca. 10Hz, so dass gemäss der Erfindung sichergestellt wird, dass Schwebungen zwischen der Rippel-Frequenz und der PWM-Frequenz in einem Bereich von mehr als 20Hz, vorzugsweise mehr als 30Hz, mehr bevorzugt mehr als 40 Hz liegen. Das Patentdokument EP-A1-2 302 984 A1 offenbart eine Betriebsschaltung für Leuchtmittel, zum Beispiel eine oder mehrere LED-Strecken, wobei die Betriebsschaltung Folgendes aufweist:
Eine ausgehend von einer AC-Spannung oder DC-Spannung versorgbare aktiv getaktete PFC-Schaltung, deren Ausgangsspannung direkt einer Einheit (Q1, Q2) zur Erzeugung eines PWM-modulierten Stroms durch die Leuchtmittel (Lamp1) zugeführt wird. Ferner wird die Frequenz der PWM-Modulation des Stroms durch die Leuchtmittel, (Lamp1) abhängig von der Frequenz der Restwelligkeit gewählt (siehe insb. Absätze 61-64). Eine erfindungsgemäße Betriebsschaltung für Leuchtmittel, insbesondere eine oder mehrere LED-Strecken weist eine ausgehend von einer AC-Spannung und optional auch einer DC-Spannung versorgbare aktiv getaktete PFC-Schaltung auf, deren Ausgangsspannung direkt oder indirekt einer Einheit zur Erzeugung eines PWM-modulierten Stroms durch die Leuchtmittel zugeführt ist. Weiterhin weist sie eine Steuereinheit auf, die eine Frequenz einer Restwelligkeit in der Spannung in der Versorgungskette vor, in oder nach der PFC-Schaltung erfasst und veranlasst, dass die Einheit zur Erzeugung eines PWM-modulierten Stroms durch die Leuchtmittel die Frequenz der PWM-Modulation des Stroms durch die Leuchtmittel abhängig von der Frequenz der Restwelligkeit gewählt ist. Wobei die Steuereinheit die Frequenz der PWM-Modulation derart bestimmt, dass sie die Frequenz der Regelschleife der PFC-Schaltung ist. So können Helligkeitsveränderungen auf Grund von Schwebungen einfach vermieden werden.
   Bevorzugt bestimmt die Steuereinheit die Frequenz der PWM-Modulation derart, dass sie ein ganzzahliges Vielfaches der Frequenz der AC-Spannung, bevorzugt ein ganzzahliges Vielfaches der doppelten Frequenz der AC-Spannung ist. So können Schwebungen auf Grund einer Nähe der Frequenz der PWM-Modulation zu der Frequenz der AC-Spannung vermieden werden.

Bevorzugt bestimmt die Steuereinheit die Frequenz der PWM-Modulation derart, dass sie zumindest 20Hz, bevorzugt zumindest 30Hz, besonders bevorzugt zumindest 40Hz entfernt von einer Frequenz der Taktung der PFC-Schaltung und ganzzahligen Vielfachen der Frequenz der Taktung der PFC-Schaltung liegt. So können Schwebungen auf Grund einer Nähe der Frequenz der PWM-Modulation zu der Frequenz der Taktung der PFC-Schaltung vermieden werden.

Vorteilhafterweise bestimmt die Steuereinheit die Frequenz der PWM-Modulation derart, dass sie die doppelte Frequenz der AC-Spannung, bevorzugt ein ganzzahliges Vielfaches der der doppelten Frequenz der AC-Spannung ist. Da die AC-Spannung üblicherweise am Eingang der Betriebsschaltung vollweggleichgerichtet wird, weist die gleichgerichtete Spannung am Eingang des Betriebsgerätes somit die doppelte Frequenz der AC-Spannung auf.

Alternativ oder zusätzlich bestimmt die Steuereinheit die Frequenz der PWM-Modulation derart, dass sie die Frequenz der Regelschleife der PFC-Schaltung, also die Frequenz der Taktung der PFC-Schaltung, bevorzugt ein ganzzahliges Vielfaches der Frequenz der Regelschleife der PFC-Schaltung ist. So ist eine Vermeidung von Schwebungen auf Grund einer Nähe der Frequenz der PWM-Modulation zu der Frequenz der AC-Spannung mit alternativen Frequenzen möglich.

Die Steuereinheit bestimmt die Frequenz der PWM-Modulation bevorzugt derart, dass sie zumindest 20Hz entfernt von ganzzahligen Vielfachen der Frequenz der AC-Spannung, bevorzugt von ganzzahligen Vielfachen der doppelten Frequenz der AC-Spannung liegt. So ist eine Vermeidung von Schwebungen auf Grund einer Nähe der Frequenz der PWM-Modulation zu der doppelten Frequenz der AC-Spannung mit alternativen Frequenzen möglich.

Besonders vorteilhaft ist die Steuereinheit mit einem Steuereingang der PFC-Schaltung verbunden, welcher eine Einstellung der Frequenz der Regelschleife der PFC-Schaltung erlaubt. Die Steuereinheit bestimmt die Frequenz der PWM-Modulation und die Frequenz der Regelschleife der PFC-Schaltung dann derart, dass die Frequenz der PWM-Modulation der Frequenz der Regelschleife der PFC-Schaltung entspricht und/oder die Frequenz der PWM-Modulation und die Frequenz der Regelschleife der PFC-Schaltung zumindest 20Hz entfernt von ganzzahligen Vielfachen der Frequenz der AC-Spannung liegen. So können Schwebungen besonders effektiv vermieden werden.

Die Steuereinheit ist bevorzugt weiterhin ausgebildet, um eine Detektion einer AC-Spannung und einer DC-Spannung durchzuführen, und um so einen Normalbetrieb und einen Notbetrieb zu unterscheiden. So kann auf eine zusätzliche Einheit für diese Detektion verzichtet werden.

Ein erfindungsgemäßes Verfahren dient zum Betrieb von Leuchtmitteln, insbesondere einer oder mehrerer LED-Strecken. Ausgehend von einer AC-Spannung und optional auch einer DC-Spannung wird eine aktiv getaktete Leistungsfaktorkorrektur durchgeführt. Eine Ausgangsspannung der Leistungsfaktorkorrektur wird direkt oder indirekt zur Erzeugung eines PWM-modulierten Stroms durch die Leuchtmittel genutzt. Eine Frequenz einer Restwelligkeit in der Spannung in der Versorgungskette vor, in oder nach der Leistungsfaktorkorrektur wird erfasst. Die Frequenz der PWM-Modulation des Stroms durch die Leuchtmittel wird dabei abhängig von der Frequenz der Restwelligkeit gewählt. Wobei die Frequenz der PWM-Modulation derart bestimmt wird, dass sie die Frequenz der Taktung der Leistungsfaktorkorrektur ist. So können Helligkeitsveränderungen auf Grund von Schwebungen einfach vermieden werden.

Nachfolgend wird die Erfindung anhand der Zeichnungen, in welchen ein vorteilhaftes Ausführungsbeispiel der Erfindung dargestellt ist, beispielhaft beschrieben. In den Zeichnungen zeigen:
- Fig. 1: ein Ausführungsbeispiel der erfindungsgemäßen Schaltungsanordnung, und
- Fig. 2: ein Ausführungsbeispiel des erfindungsgemäßen Verfahren.

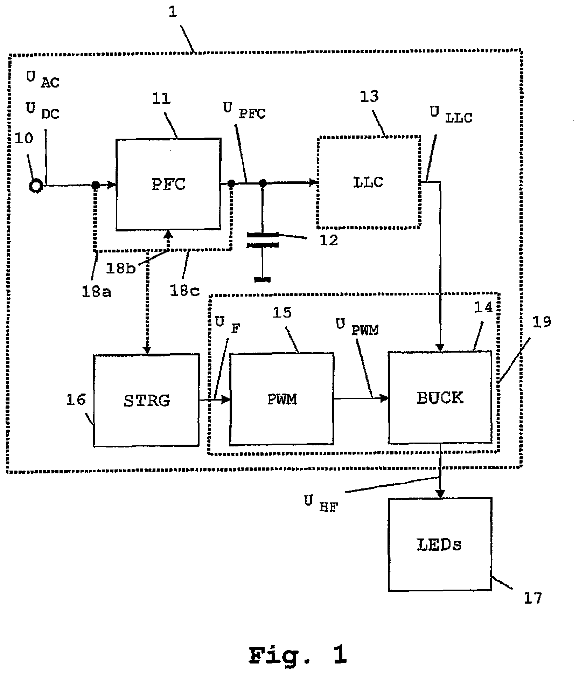

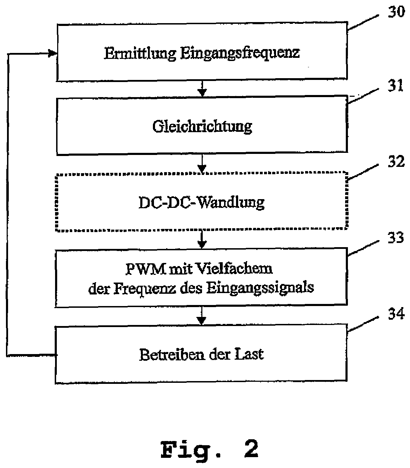

Zunächst wird anhand der Fig. 1 auf den Aufbau und die Funktionsweise eines Ausführungsbeispiels der erfindungsgemäßen Schaltungsanordnung eingegangen. Anschließend wird von Fig. 2 im Detail die Funktionsweise eines Ausführungsbeispiels des erfindungsgemäßen Verfahrens gezeigt. Identische Elemente wurden in ähnlichen Abbildungen zum Teil nicht wiederholt dargestellt und beschrieben.

Fig. 1 zeigt ein Ausführungsbeispiel der erfindungsgemäßen Schaltungsanordnung. Eine Betriebsschaltung 1 weist einen Netzanschluss 10 auf. Der Netzanschluss 10 dient dem Einspeisen einer AC-Spannung U_{AC}. Es muss sich dabei nicht um eine Netzspannung handeln. Auch die Einspeisung einer DC-Spannung U_{DC} in einem Notbetrieb ist möglich.

Die Betriebsschaltung 1 weist weiterhin eine PFC-Schaltung 11, einen Glättungskondensator 12, einen Gleichspannungs-Gleichspannungs-Wandler 13, ein Pulsweitenmodulator-Modul 19, und eine Steuereinheit 16 auf. Die PFC-Schaltung 11 ist dabei eine Leistungsfaktor-Korrekturschaltung. Sie ist mit dem Netzanschluss 10 verbunden. Der Eingang der PFC-Schaltung 11 ist über einen Netzfilter und eine Gleichrichterbrücke mit dem Netzanschluss 10 verbunden. Der Ausgang der PFC-Schaltung 11 ist mit dem Glättungskondensator 12 verbunden, welcher wiederum mit Masse verbunden ist. Weiterhin ist der Ausgang der PFC-Schaltung 11 mit einem Eingang des DC/DC-Wandlers 13 verbunden. Ein Ausgang dieses Wandlers 13 ist mit dem Pulsweitenmodulator-Modul 19 verbunden.

Das Pulsweitenmodulator-Modul 19 umfasst dabei einen Abwärtswandler 14 und einen Pulsweitenmodulator 15 und ist eine Einheit zur Pulsweitenmodulation des Stroms durch die Leuchtmittel 17. Der Gleichspannungs-Gleichspannungs-Wandler 13 ist dabei mit dem Abwärtswandler 14 verbunden. Der Pulsweitenmodulator 15 ist ebenfalls mit dem Abwärtswandler 14 verbunden. Die Steuereinheit 16 ist darüber hinaus mit dem Pulsweitenmodulator 15 des Pulsweitenmodulator-Moduls 19 verbunden. Darüber hinaus ist die Steuereinheit 16 mit der PFC-Schaltung 11 verbunden. Die Verbindung 18a erfolgt dabei entweder zu dem Eingang der PFC-Schaltung 11 oder die Verbindung 18b erfolgt direkt zu der PFC-Schaltung 11 oder die Verbindung 18c erfolgt zu dem Ausgang der PFC-Schaltung 11. Der Abwärtswandler 14 des Pulsweitenmodulator-Moduls 19 ist dabei mit einer Last, hier einem LED-Modul 17 verbunden.

Die Frequenz des Pulsweitenmodulators 15 ist dabei kontinuierlich oder in diskreten Schritten einstellbar.

Zusätzlich kann optional das Tastverhältnis des Pulsweitenmodulators 15 einstellbar sein.

Alternativ oder zusätzlich kann die Amplitude des Leuchtmittelstroms währen der Einschaltzeitdauer eines PWM-Impulses einstellbar sein.

Eine AC-Spannung U_{AC}, bevorzugt eine Netzspannung wird an dem Netzanschluss 10 eingespeist. Die PFC-Schaltung 11 leitet einzelne Abschnitte der AC-Spannung U_{AC} aus jeder Welle an seinen Ausgang weiter und richtet diese gleich. Ist stattdessen in einem Notbetrieb eine DC-Spannung U_{DC} angeschlossen, so leitet die PFC-Schaltung 11 einzelne Abschnitte dieses Signals U_{DC} weiter. Der Glättungskondensator 12 glättet die resultierende Spannung U_{PFC}. Diese resultierende Spannung U_{PFC} ist dabei eine Gleichspannung mit einer Restwelligkeit. Die Restwelligkeit weist dabei die doppelte Frequenz der AC-Spannung U_{AC} auf, da es sich um eine gleichgerichtete AC-Spannung handelt. Zusätzlich kann die Restwelligkeit eine Frequenz aufweisen, welche der Frequenz der Regelschleife der Leistungsfaktorkorrektur entspricht. Die Regelschleife der PFC-Schaltung 11 (Leistungsfaktorkorrektur) weist üblicherweise eine niederfrequente Charakteristik auf, um eine möglichst sinusförmige Stromaufnahme bei möglichst konstanter Ausgangsspannung zu ermöglichen.

Die gleichgerichtete AC-Spannung U_{PFC} wird dem Gleichspannungs-Gleichspannungs-Wandler 13 zugeführt. Dieser wandelt die eingespeiste Gleichspannung U_{PFC} in eine Gleichspannung reduzierter Spannung U_{LLC}. Je nach Last ist auch eine Spannungserhöhung durch den Gleichspannungs-Gleichspannungs-Wandler 13 denkbar. Die resultierende Gleichspannung U_{LLC} wird dem Pulsweitenmodulator-Modul 19 zugeführt. Dabei wird sie dem Abwärtswandler 14 des Pulsweitenmodulator-Moduls 19 zugeführt. Gleichzeitig wird dem Abwärtswandler 14 ein Pulsweitenmodulationssignal U_{PWM} von dem Pulsweitenmodulator 15 zugeführt. Bei dem Pulsweitenmodulationssignal U_{PWM} handelt es sich um eine gepulste Gleichspannung. Die Spannung des Pulsweitenmodulationssignals U_{PWM} liegt bevorzugt deutlich niedriger als die Spannung U_{LLC}. Mittels des Tastverhältnisses des Pulsweitenmodulationssignals U_{PWM} kann die Leistung, welche der Last, hier dem LED-Modul 17 zugeführt wird, eingestellt werden.

Der Abwärtswandler 14 ist nur ein mögliches Beispiel für ein PWM-Modul, welches eine PWM-Modulation des Stromes durch das Leuchtmittel 17 zum Einstellen der Leistung des Leuchtmittels 17 und somit zum Beeinflussen der Helligkeit, beispielsweise eines Dimmlevels, des Leuchtmittels 17 bewirkt. Anstelle des Abwärtswandlers 14 können auch andere Schaltreglertopologien zur Ansteuerung des Leuchtmittels 17 eingesetzt werden. Das Pulsweitenmodulationssignal U_{PWM} kann auch indirekt als Information dem Abwärtswandler 14 zugeführt werden, wobei der Abwärtswandler 14 abhängig von dieser Information das Leuchtmittel 17, beispielsweise das LED-Modul, mit dem Pulsweitenmodulationssignals U_{PWM} ansteuert. Der Abwärtswandler 14 arbeitet vorzugsweise mit einer hochfrequenten Taktung, wobei diese Taktung jeweils nur während des Anliegens eines Hoch-Pegels des Pulsweitenmodulationssignals U_{PWM} erfolgt (also während der Einschaltphase des Pulsweitenmodulationssignals U_{PWM}).

Der Abwärtswandler 14 als PWM-Modul kann während seiner aktiven Phase (also während der Einschaltphase des Pulsweitenmodulationssignals U_{PWM}) aufgrund einer Regelschleife den Strom auf einen vorgegebenen Wert regeln. Er weist zumindest ein hochfrequent getaktetes Schaltelement sowie einen Energiespeicher auf, wobei der Energiespeicher durch das hochfrequent getaktete Schaltelement gezielt dauernd auf- und entladen wird und dadurch seiner Energie kontrolliert an das Leuchtmittel 17 abgibt.

Die Frequenz des Pulsweitenmodulationssignals U_{PWM} wird dabei durch die Steuereinheit 16 eingestellt. Die Steuereinheit 16 ermittelt die Frequenz der AC-Spannung U_{AC} bzw. die Frequenz der Restwelligkeit des gleichgerichteten Signals U_{PFC} und stellt basierend darauf dem Pulsweitenmodulator 15 ein Signal U_{F} zur Verfügung, welches die ermittelte Frequenz anzeigt. Der Pulsweitenmodulator 15 erzeugt das Pulsweitenmodulationssignal U_{PWM} basierend auf dem Signal U_{F}. Dabei wird das Pulsweitenmodulationssignal U_{PWM} als ganzzahliges Vielfaches der Frequenz der AC-Spannung, bevorzugt als ganzzahliges Vielfaches doppelten der Frequenz der AC-Spannung U_{AC} eingestellt.

Ist die Steuereinheit 16 mit der Leistungsfaktor-Korrekturschaltung 11 verbunden, ist eine indirekte Erfassung der Frequenz der AC-Spannung möglich. So erfolgt die Erfassung über einen Parameter der Leistungsfaktor-Korrektur. Beispielsweise kann eine Zeit t_{off} der Leistungsfaktor-Korrektur als Indikator für die Frequenz bzw. das Doppelte der Frequenz eingesetzt werden.

Unabhängig von der Frequenz des Signals U_{AC} wird somit erreicht, dass sich keine niederfrequenten Mischprodukte in dem Abwärtswandler 14 bilden. Sichtbare Helligkeitsschwankungen treten somit nicht auf.

Darüber hinaus kann die Steuereinheit 16 alternativ zusätzlich die Frequenz der Regelschleife der Leistungsfaktor-Korrektur durch die PFC-Schaltung 11 ermitteln, wenn die Verbindung 18b besteht. In diesem Fall bestimmt die Steuereinheit 16 die Frequenz des Signals U_{F} derart, dass sie ebenfalls nicht nahe bei der Frequenz der Regelschleife der PFC-Schaltung 11 liegt. D.h. die Frequenz des Signals U_{F} wird derart ausgewählt, dass sie zusätzlich zumindest 20Hz, bevorzugt zumindest 30Hz, besonders bevorzugt zumindest 40Hz von der Frequenz der Regelschleife der PFC-Schaltung entfernt liegt.

Da das Signal U_{PFC} neben der Restwelligkeit des Netzsignals zusätzlich eine Restwelligkeit der Leistungsfaktor-Korrektur aufweisen kann, können so sichtbare Helligkeitsschwankungen noch besser vermieden werden.

Alternativ kann die Steuereinheit 16 anstatt einer Detektion einer tatsächlichen Frequenz einen Schalter beinhalten, über welchen ein Nutzer die anliegende Netzfrequenz einstellt. In diesem Fall verfügt die Steuereinheit 16 über keine Verbindung zu der PFC-Schaltung 11. Insbesondere bei Betriebsschaltungen für Leuchtmittel genügt üblicherweise eine Betriebsmöglichkeit bei 50Hz und bei 60Hz Netzspannung. Die Steuereinheit 16 beinhaltet somit einen Schalter, mit welchem die Betriebsfrequenz zwischen 50Hz und 60 Hz umgeschaltet werden kann. Daraus folgt bevorzugt eine Pulsweitenmodulationsfrequenz von einem Vielfachen von 100Hz bzw. einem Vielfachen von 120Hz. Zusätzlich kann auch hier der Frequenzbereich der Regelschleife der PFC-Schaltung vermieden werden.

Die Steuereinheit 16 ist in einer bevorzugten Ausführung insbesondere ausgebildet, um Eingangsfrequenzen von 50 Hz bzw. 60 Hz bzw. Frequenzen der Restwelligkeit von 100 Hz bzw. 120 Hz zu detektieren. So kann die Steuereinheit 16 sehr einfach ausgeführt werden, da lediglich diese festen Werte unterschieden werden müssen. Dies kann beispielsweise durch auf diese Frequenzen abgestimmte Resonatoren innerhalb der Steuereinheit 16 erfolgen.

Darüber hinaus ist eine Stromregelung der Last durch einen in Serie zu der Last geschalteten Linearregler möglich.

Aus dem Stand der Technik ist es bekannt, zur Verbesserung der elektromagnetischen Interferenz-Eigenschaften eine Frequenz der hochfrequenten Taktung der PFC-Schaltung zu modulieren, beispielsweise beim Anliegen einer DC-Spannung am Netzanschluss 10, zum Beispiel im Falle eines Notlichtbetriebs. Um niederfrequente Schwebungen zwischen der Frequenz der Pulsweitenmodulation oder auch deren Harmonischen und der Frequenz der hochfrequenten Taktung der PFC-Schaltung zu vermeiden, ist die Steuereinheit 16 in einem vorteilhaften Ausführungsbeispiel weiterhin ausgebildet, um die Frequenz der hochfrequenten Taktung der PFC-Schaltung zu erfassen und zu verarbeiten. Die Steuereinheit 16 bestimmt somit die Frequenz der Pulsweitenmodulation als ganzzahliges Teiler der Frequenz der hochfrequenten Taktung der PFC-Schaltung. Dabei werden Werte vermieden, bei denen ganzzahlige Vielfache der Frequenz der Pulsweitenmodulation bei einer Frequenz der hochfrequenten Taktung der PFC-Schaltung 11 liegen würden.

Die Steuereinheit 16 ist in einem weiteren Ausführungsbeispiel weiterhin ausgebildet, um die Frequenz der gleichgerichteten Eingangsspannung zu erfassen und zu verarbeiten. Die Steuereinheit 16 bestimmt somit die Frequenz der Pulsweitenmodulation als ganzzahliges Vielfaches der Eingangsfrequenz. Dabei werden Werte vermieden, welche nahe bei ganzzahligen Vielfachen der Frequenz der Taktung der PFC-Schaltung 11 liegen.

Alternativ ist es möglich die Frequenz der Pulsweitenmodulation auf die Frequenz der Regelschleife der PFC-Schaltung bzw. ein ganzzahliges Vielfaches dieser Frequenz einzustellen und somit der Modulation der Frequenz der Taktung der PFC-Schaltung zu folgen. Dabei ist jedoch zu beachten, dass die ausgewählte Frequenz der Pulsweitenmodulation nicht nahe bei einem ganzzahligen Vielfachen der Netzfrequenz, bzw. einem ganzzahligen Vielfachen der Restwelligkeit, liegen darf. In diesem Fall wird ein Abstand von zumindest 20Hz zu einem ganzzahligen Vielfachen der Eingangsfrequenz gehalten.

In einem alternativen Ausführungsbeispiel steuert die Steuereinheit 16 nicht nur die Frequenz der Pulsweitenmodulation 15, sondern steuert zusätzlich die Frequenz der hochfrequenten Taktung und/oder der Regelschleife der PFC-Schaltung. So sind eine optimale Abstimmung und eine Vermeidung jeglicher Schwebungen möglich.

Statt einer einzelnen Steuereinheit 16, welche die Frequenz der Taktung der PFC-Schaltung 11 und die Frequenz der Pulsweitenmodulation steuert, ist auch eine Trennung dieser beiden Einheiten möglich. Eine PFC-Steuereinrichtung steuert dann die Leistungsfaktor-Korrektur. Sie ist über eine Synchronisationsleitung mit der Steuereinheit 16 verbunden. Über die Synchronisationsleitung tauschen sich die beiden Einrichtungen aus und ermitteln so geeignete Frequenzen.

In einer alternativen Ausführung kann die Steuereinheit 16 gleichzeitig zur Detektion von Gleichspannung bzw. AC-Spannung als Eingangssignal dienen. Die Steuereinheit 16 erfüllt dann den zusätzlichen Nutzen der Detektion eines Notbetriebs.

In Fig. 2 ist ein Ausführungsbeispiel des erfindungsgemäßen Verfahrens dargestellt. In einem ersten Schritt 30 wird die Frequenz des Eingangssignals ermittelt. Alternativ kann dieser Schritt auch gleichzeitig oder nach dem zweiten Schritt 31 erfolgen. Erfolgt der Schritt 30 gleichzeitig oder nach dem Schritt 31, so wird statt der Eingangsfrequenz die Frequenz der Restwelligkeit des Signals bestimmt.

In einem zweiten Schritt 31 findet eine Gleichrichtung des Eingangssignals statt. Innerhalb dieses Schritts 31 kann das gleichgerichtete Signal darüber hinaus geglättet werden. Das resultierende Signal weist jedoch eine Restwelligkeit auf. Statt des ersten Schritts 30, kann nun anschließend auch die Frequenz dieser Restwelligkeit ermittelt werden.

In einem optionalen dritten Schritt 32 findet eine Gleichspannungs-Gleichspannungs-Wandlung statt. D.h., die aus der Gleichrichtung und Glättung resultierende Gleichspannung wird in ihrem Niveau abgesenkt oder erhöht. Bei dem Beispiel der Fig. 1 erfolgt der Schritt 31 in dem Block PFC-Schaltung 11. Der Schritt 32 erfolgt gemäß der Fig. 1 in dem Block Gleichspannungs-Gleichspannungs-Wandler 13. Es können auch die beiden Schritte 31 und 32 zusammengefasst werden und innerhalb eines Blocks durchgeführt werden, beispielsweise mittels eines isolierenden Sperrwandlers mit Leistungsfaktorkorrektur-Funktionalität.

In einem vierten Schritt 33 findet eine Pulsweitenmodulation der resultierenden Gleichspannung statt. Dieser Schritt 33 erfolgt bei der Fig. 1 mittels des Abwärtswandlers 14. Die Pulsweitenmodulation findet dabei bei einer Frequenz, welche einem Vielfachen der ermittelten Frequenz des Eingangssignals entspricht, statt. Bevorzugt erfolgt die Pulsweitenmodulation mit einem ganzzahligen Vielfachen der doppelten Frequenz des Eingangssignals. Ist zuvor die Frequenz der Restwelligkeit ermittelt worden, so erfolgt die Pulsweitenmodulation mit einem ganzzahligen Vielfachen der Frequenz der Restwelligkeit. Optional wird die Frequenz der Pulsweitenmodulation dabei derart ausgewählt, dass sie zusätzlich oder alternativ zumindest 20Hz, bevorzugt zumindest 30Hz, besonders bevorzugt zumindest 40Hz von der Frequenz der Regelschleife der Leistungsfaktor-Korrektur entfernt liegt. Mit dem Tastverhältnis der Pulsweitenmodulation kann in diesem Schritt zusätzlich die der Last zugeführte Leistung bestimmt werden.

In einem fünften Schritt 34 wird die Last mit dem pulsweitenmodulierten Signal betrieben. Nach dem fünften Schritt 34 mit dem ersten Schritt 30 fortgefahren. Dieses Verfahren wird beliebig oft wiederholt.

Die Erfindung ist nicht auf das dargestellte Ausführungsbeispiel beschränkt. Wie bereits erwähnt, können unterschiedliche Lasten eingesetzt werden. Darüber hinaus kann auf den Gleichspannungs-Gleichspannungs-Wandler 13 verzichtet werden oder dieser kann in den Block PFC-Schaltung 11 integriert werden. Auch eine direkte Pulsweitenmodulation ohne einen zusätzlichen Abwärtswandler 14 oder durch eine andere Schaltreglertopologie ist denkbar. Eine direkte Pulsweitenmodulation kann durch den Gleichspannungs-Gleichspannungs-Wandler 13 ermöglicht werden, indem dieser nur während Einschaltphase des Pulsweitenmodulationssignals U_{PWM} aktiv ist. Alle vorstehend beschriebenen Merkmale oder in den Figuren gezeigten Merkmale sind im Rahmen der Erfindung beliebig vorteilhaft miteinander kombinierbar.

## Patentansprüche

1. Betriebsschaltung für Leuchtmittel, insbesondere eine oder mehrere LED-Strecken, aufweisend:
- eine ausgehend von einer AC-Spannung (U_{AC}) und optional auch einer DC-Spannung (U_{DC}) versorgbare aktiv getaktete PFC-Schaltung (11), deren Ausgangsspannung (U_{PFC}) direkt oder indirekt einer Einheit (19) zur Erzeugung eines PWM-modulierten Stroms durch die Leuchtmittel (17) zugeführt ist,
- eine Steuereinheit (16), die eine Frequenz einer Restwelligkeit in der Spannung (U_{PFC}) in der Versorgungskette vor (18a), in (18b) oder nach (18c) der PFC-Schaltung (11) erfasst und veranlasst, dass die Einheit (19) zur Erzeugung eines PWM-modulierten Stroms durch die Leuchtmittel (17) die Frequenz der PWM-Modulation des Stroms durch die Leuchtmittel (17) abhängig von der Frequenz der Restwelligkeit wählt,
wobei die Steuereinheit (16) die Frequenz der PWM-Modulation derart bestimmt, dass sie die Frequenz der Regelschleife der PFC-Schaltung (11) ist.

2. Betriebsschaltung nach Anspruch 1,
**dadurch gekennzeichnet,**
**dass** die Steuereinheit (16) die Frequenz der PWM-Modulation derart bestimmt, dass sie ein ganzzahliges Vielfaches der Frequenz der AC-Spannung (U_{AC}), bevorzugt ein ganzzahliges Vielfaches der doppelten Frequenz der AC-Spannung (U_{AC}) ist.

3. Betriebsschaltung nach Anspruch 2,
**dadurch gekennzeichnet,**
**dass** die Steuereinheit (16) die Frequenz der PWM-Modulation derart bestimmt, dass sie zumindest 20Hz, bevorzugt zumindest 30Hz, besonders bevorzugt zumindest 40Hz entfernt von einer Frequenz der Regelschleife der PFC-Schaltung und ganzzahligen Vielfachen der Frequenz der Regelschleife der PFC-Schaltung (11) liegt.

4. Betriebsschaltung nach Anspruch 1,
**dadurch gekennzeichnet,**
**dass** die Steuereinheit (16) die Frequenz der PWM-Modulation derart bestimmt, dass sie ein ganzzahliges Vielfaches der Frequenz der Regelschleife der PFC-Schaltung (11) ist.

5. Betriebsschaltung nach Anspruch 4,
**dadurch gekennzeichnet,**
**dass** die Steuereinheit (16) die Frequenz der PWM-Modulation derart bestimmt, dass sie zumindest 20Hz entfernt von ganzzahligen Vielfachen der Frequenz der AC-Spannung (U_{AC}), bevorzugt von ganzzahligen Vielfachen der doppelten Frequenz der AC-Spannung (U_{AC}) liegt.

6. Betriebsschaltung nach einem der Ansprüche 1 bis 5,
**dadurch gekennzeichnet,**
**dass** die Steuereinheit (16) mit einem Steuereingang der PFC-Schaltung (11) verbunden ist, welcher eine Einstellung der Frequenz der Regelschleife der PFC-Schaltung (11) erlaubt,
**dass** die Steuereinheit (16) die Frequenz der PWM-Modulation und die Frequenz der Regelschleife der PFC-Schaltung (11) derart bestimmt, dass die Frequenz der PWM-Modulation der Frequenz der Regelschleife der PFC-Schaltung (11) entspricht und/oder die Frequenz der PWM-Modulation und die Frequenz der Regelschleife der PFC-Schaltung (11) zumindest 20Hz entfernt von ganzzahligen Vielfachen der Frequenz der AC-Spannung (U_{AC}) liegen.

7. Betriebsschaltung nach einem der Ansprüche 1 bis 6,
**dadurch gekennzeichnet,**
**dass** die Steuereinheit (16) weiterhin ausgebildet ist, um eine Detektion einer AC-Spannung (U_{AC}) und einer DC-Spannung (U_{DC}) durchzuführen, und um so einen Normalbetrieb und einen Notbetrieb zu unterscheiden.

8. System mit einer Betriebsschaltung nach einem der Ansprüche 1 bis 7 und einer Leuchtmittel-Last (17), bevorzugt einem LED-Modul.

9. Verfahren zum Betrieb von Leuchtmitteln, insbesondere einer oder mehrerer LED-Strecken,
wobei ausgehend von einer AC-Spannung (U_{AC}) oder einer DC-Spannung (U_{DC}) eine aktiv getaktete Leistungsfaktorkorrektur durchgeführt wird,
wobei eine Ausgangsspannung (U_{PFC}) der Leistungsfaktorkorrektur direkt oder indirekt zur Erzeugung eines PWM-modulierten Stroms durch die Leuchtmittel (17) genutzt wird,
wobei eine Frequenz einer Restwelligkeit in der Spannung (U_{PFC}) in der Versorgungskette vor (18a), in (18b) oder nach (18c) der Leistungsfaktorkorrektur erfasst wird, und wobei die Frequenz der PWM-Modulation des Stroms durch die Leuchtmittel (17) abhängig von der Frequenz der Restwelligkeit gewählt wird,
wobei die Frequenz der PWM-Modulation derart bestimmt wird, dass sie die Frequenz der Taktung der Leistungsfaktorkorrektur ist.

10. Verfahren nach Anspruch 9,
**dadurch gekennzeichnet,**
**dass** die Frequenz der PWM-Modulation derart bestimmt wird, dass sie ein ganzzahliges Vielfaches der Frequenz der AC-Spannung (U_{AC}), bevorzugt ein ganzzahliges Vielfaches der doppelten Frequenz der AC-Spannung (U_{AC}) ist.

11. Verfahren nach Anspruch 10,
**dadurch gekennzeichnet,**
**dass** die Frequenz der PWM-Modulation derart bestimmt wird, dass sie zumindest 20Hz, bevorzugt zumindest 30Hz, besonders bevorzugt zumindest 40Hz entfernt von einer Frequenz der Regelschleife der Leistungsfaktorkorrektur und ganzzahligen Vielfachen der Frequenz der Regelschleife der Leistungsfaktorkorrektur liegt.

12. Verfahren nach Anspruch 9,
**dadurch gekennzeichnet,**
**dass** die Frequenz der PWM-Modulation derart bestimmt wird, dass sie ein ganzzahliges Vielfaches der Frequenz der Taktung der Leistungsfaktorkorrektur ist.

13. Verfahren nach Anspruch 12,
**dadurch gekennzeichnet,**
**dass** die Frequenz der PWM-Modulation derart bestimmt wird, dass sie zumindest 20Hz entfernt von ganzzahligen Vielfachen der Frequenz der AC-Spannung (U_{AC}), bevorzugt von ganzzahligen Vielfachen der doppelten Frequenz der AC-Spannung (U_{AC}) liegt.

14. Verfahren nach einem der Ansprüche 8 bis 13,
**dadurch gekennzeichnet,**
**dass** die Frequenz der PWM-Modulation und die Frequenz der Taktung der Leistungsfaktorkorrektur derart bestimmt werden, dass die Frequenz der PWM-Modulation der Frequenz der Regelschleife der Leistungsfaktorkorrektur entspricht und/oder die Frequenz der PWM-Modulation und die Frequenz der Regelschleife der Leistungsfaktorkorrektur zumindest 20Hz entfernt von ganzzahligen Vielfachen der Frequenz der AC-Spannung (U_{AC}) liegen.

15. Verfahren nach einem der Ansprüche 8 bis 14,
**dadurch gekennzeichnet,**
**dass** eine Detektion einer AC-Spannung (U_{AC}) und einer DC-Spannung (U_{DC}) durchgeführt wird, und
**dass** so ein Normalbetrieb und einen Notbetrieb unterschieden werden.

## Claims

1. An operating circuit for lighting means, in particular, one or more LED sections, having:
- an actively clocked PFC circuit (11), which can be supplied by an AC voltage (U_{AC}) and optionally also a DC voltage (U_{DC}), the output voltage (U_{PFC}) of which is directly or indirectly supplied to a unit (19) for generating a PWM-modulated current through the lighting means (17),
- a control unit (16), which detects a frequency of a residual ripple in the voltage (U_{PFC}) in the supply chain before (18a), in (18b) or after (18c) the PFC circuit (11) and causes the unit (19) for generating a PWM-modulated current through the lighting means (17) to select the frequency of the PWM modulation of the current through the lighting means (17) depending on the frequency of the residual ripple,
wherein the control unit (16) determines the frequency of the PWM modulation in such a manner that it is the frequency of the control loop of the PFC circuit (11).

2. An operating circuit according to Claim 1,
**characterized in**
**that** the control unit (16) determines the frequency of the PWM modulation in such a manner that it is an integral multiple of the frequency of the AC voltage (U_{AC}), preferably an integral multiple of twice the frequency of the AC voltage (U_{AC}).

3. An operating circuit according to Claim 2,
**characterized in**
**that** the control unit (16) determines the frequency of the PWM modulation in such a manner that it is at least 20Hz, preferably at least 30Hz, particularly preferably at least 40Hz away from a frequency of the control loop of the PFC circuit and integral multiples of the frequency of the control loop of the PFC circuit (11).

4. An operating circuit according to Claim 1,
**characterized in**
**that** the control unit (16) determines the frequency of the PWM modulation in such a manner that it is an integral multiple of the frequency of the control loop of the PFC circuit (11).

5. An operating circuit according to Claim 4,
**characterized in**
**that** the control unit (16) determines the frequency of the PWM modulation in such a manner that it is at least 20Hz away from integral multiples of the frequency of the AC voltage(U_{AC}), preferably from integral multiples of twice the frequency of the AC voltage (U_{AC}).

6. An operating circuit according to any one of Claims 1 to 5,
**characterized in**
**that** the control unit (16) is connected with a control input of the PFC circuit (11), which permits a setting of the frequency of the control loop of the PFC circuit (11),
**that** the control unit (16) determines the frequency of the PWM modulation and the frequency of the control loop of the PFC circuit (11) in such a manner that the frequency of the PWM modulation corresponds to the frequency of the control loop of the PFC circuit (11) and/or the frequency of the PWM modulation and the frequency of the control loop of the PFC circuit (11) are at least 20Hz away from integral multiples of the frequency of the AC voltage (U_{AC}).

7. An operating circuit according to any one of Claims 1 to 6,
**characterized in**
**that** the control unit (16) is furthermore designed in order to carry out a detection of an AC voltage (U_{AC}) or a DC voltage (U_{DC}), and in order thus to differentiate a normal operation and an emergency operation.

8. A system with an operating circuit according to any one of Claims 1 to 7 and a lighting means load (17), preferably a LED module.

9. A method for operating lighting means, in particular, one or more LED sections,
wherein an actively clocked power factor correction is carried out based on an AC voltage (U_{AC}) or a DC voltage (U_{DC}),
wherein output voltage (U_{PFC}) of the power factor correction is used directly or indirectly for generating a PWM-modulated current through the lighting means (17), wherein a frequency of a residual ripple in the voltage (U_{PFC}) is detected in the supply chain before (18a), in (18b) or after (18c) the power factor correction, and
wherein the frequency of the PWM modulation of the current through the lighting means (17) is selected depending on the frequency of the residual ripple,
wherein the frequency of the PWM modulation is determined in such a manner that it is the frequency of the clocking of the power factor correction.

10. A method according to Claim 9,
**characterized in**
**that** the frequency of the PWM modulation is determined in such a manner that it is an integral multiple of the frequency of the AC voltage (U_{AC}), preferably an integral multiple of twice the frequency of the AC voltage (U_{AC}).

11. A method according to Claim 10,
**characterized in**
**that** the frequency of the PWM modulation is determined in such a manner that it is at least 20Hz, preferably at least 30Hz, particularly preferably at least 40Hz away from a frequency of the control loop of the power factor correction and integral multiples of the frequency of the control loop of the power factor correction.

12. A method according to Claim 9,
**characterized in**
**that** the frequency of the PWM modulation is determined in such a manner that it is an integral multiple of the frequency of the clocking of the power factor correction.

13. A method according to Claim 12,
**characterized in**
**that** the frequency of the PWM modulation is determined in such a manner that it is at least 20Hz away from integral multiples of the frequency of the AC voltage (U_{AC}), preferably from integral multiples of twice the frequency of the AC voltage (U_{AC}).

14. A method according to any one of Claims 8 to 13,
**characterized in**
**that** the frequency of the PWM modulation and the frequency of the clocking of the power factor correction are determined in such a manner that the frequency of the PWM modulation corresponds to the frequency of the control loop of the power factor correction and/or the frequency of the PWM modulation and the frequency of the control loop of the power factor correction are at least 20Hz away from integral multiples of the frequency of the AC voltage (U_{AC}).

15. A method according to any one of Claims 8 to 14,
**characterized in**
**that** a detection of an AC voltage (U_{AC}) and a DC voltage (U_{DC}) is carried out, and that a normal operation and an emergency operation are thus differentiated.

## Revendications

1. Circuit d'actionnement pour des moyens d'éclairage, plus particulièrement une ou plusieurs lignes de LED, comprenant :
- un circuit PFC (11) cadencé activement pouvant être alimenté par une tension (U_{AC}) et en option également une tension DC (U_{DC}), dont la tension de sortie (U_{PFC}) est introduite directement ou indirectement dans une unité (19) pour la génération d'un courant modulé PWM à travers les moyens d'éclairage (17),
- une unité de commande (16), qui mesure une fréquence d'une ondulation résiduelle dans la tension (U_{PFC}) dans la chaîne d'alimentation avant (18a), dans (18b) ou après (18c), le circuit PFC (11) et fait en sorte que l'unité (19) pour la génération d'un courant modulé PWM à travers les moyens d'éclairage (17) choisisse la fréquence de la modulation PWM du courant à travers les moyens d'éclairage (17) en fonction de la fréquence de l'ondulation résiduelle, l'unité de commande (16) déterminant la fréquence de la modulation PWM de façon à ce qu'elle soit la fréquence de la boucle de régulation du circuit PFC (11).

2. Circuit d'actionnement selon la revendication 1,
**caractérisé en ce que**
l'unité de commande (16) détermine la fréquence de la modulation PWM de façon à ce qu'elle soit un multiple entier de la fréquence de la tension AC (U_{AC}), de préférence un multiple entier du double de la fréquence de la tension AC (U_{AC}).

3. Circuit d'actionnement selon la revendication 2,
**caractérisé en ce que**
l'unité de commande (16) détermine la fréquence de la modulation PWM de façon à ce qu'elle se trouve à au moins 20 Hz, de préférence à au moins 30 Hz, plus particulièrement de préférence à au moins 40 Hz de distance par rapport à une fréquence de la boucle de régulation du circuit PFC et aux multiples entiers de la fréquence de la boucle de régulation du circuit PFC (11).

4. Circuit d'actionnement selon la revendication 1,
**caractérisé en ce que**
l'unité de commande (16) détermine la fréquence de la modulation PWM de façon à ce qu'elle soit un multiple entier de la fréquence de la boucle de régulation du circuit PFC (11).

5. Circuit d'actionnement selon la revendication 4,
**caractérisé en ce que**
l'unité de commande (16) détermine la fréquence de la modulation PWM de façon à ce qu'elle se trouve à au moins 20 Hz des multiples entiers de la fréquence de la tension AC (U_{AC}), de préférence des multiples entiers du double de la fréquence de la tension AC (U_{AC}).

6. Circuit d'actionnement selon l'une des revendications 1 à 5,
**caractérisé en ce que**
l'unité de commande (16) est reliée avec une entrée de commande du circuit PFC (11), qui permet un réglage de la fréquence de la boucle de régulation du circuit PFC (11),
l'unité de commande (16) détermine la fréquence de la modulation PWM et la fréquence de la boucle de régulation du circuit PFC (11) de façon à ce que la fréquence de la modulation PWM corresponde à la fréquence de la boucle de régulation du circuit PFC (11) et/ou la fréquence de la modulation PWM et la fréquence de la boucle de régulation du circuit PFC (11) se trouvent à 20 Hz des multiples entiers de la fréquence de la tension AC (U_{AC}).

7. Circuit d'actionnement selon l'une des revendications 1 à 6,
**caractérisé en ce que**
l'unité de commande (16) est en outre conçue pour effectuer une détection d'une tension AC (U_{AC}) et d'une tension DC (U_{DC}) et pour différencier ainsi un fonctionnement normal d'un fonctionnement d'urgence.

8. Système avec un circuit d'actionnement selon l'une des revendications 1 à 7 et une charge de moyen d'éclairage (17), de préférence un module LED.

9. Procédé pour l'actionnement de moyens d'éclairage, plus particulièrement d'une ou plusieurs lignes de LED,
moyennant quoi, à partir d'une tension AC (U_{AC}), une correction de facteur de puissance cadencée activement est effectuée,
une tension de sortie (U_{PFC}) de la correction de facteur de puissance étant utilisée directement ou indirectement pour la génération d'un courant modulé PWM à travers les moyens d'éclairage (17),
une fréquence d'une ondulation résiduelle dans la tension (U_{PFC}) étant mesurée dans la chaîne d'alimentation avant (18a), dans (18b) ou après (18c) la correction du facteur de puissance et
la fréquence de la modulation PWM du courant à travers les moyens d'éclairage (17) étant choisie en fonction de la fréquence de l'ondulation résiduelle,
la fréquence de la modulation PWM étant déterminée de façon à ce qu'elle soit la fréquence du cadencement de la correction du facteur de puissance.

10. Procédé selon la revendication 9,
**caractérisé en ce que**
la fréquence de la modulation PWM est déterminée de façon à ce qu'elle soit un multiple entier de la fréquence de la tension AC (U_{AC}), de préférence un multiple entier du double de la fréquence de la tension AC (U_{AC}).

11. Procédé selon la revendication 10,
**caractérisé en ce que**
la fréquence de la modulation PWM est déterminée de façon à ce qu'elle se trouve à au moins 20 Hz, de préférence au moins 30 Hz, plus particulièrement de préférence à au moins 40 Hz d'une fréquence de la boucle de régulation de la correction du facteur de puissance et des multiples entiers de la fréquence de la boucle de régulation de la correction du facteur de puissance.

12. Procédé selon la revendication 9,
**caractérisé en ce que**
la fréquence de la modulation PWM est déterminée de façon à ce qu'elle soit un multiple entier de la fréquence du cadencement de la correction du facteur de puissance.

13. Procédé selon la revendication 12,
**caractérisé en ce que**
la fréquence de la modulation PWM est déterminée de façon à ce qu'elle se trouve à au moins 20 Hz des multiples entiers de la fréquence de la tension AC (U_{AC}), de préférence des multiples entiers du double de la fréquence de la tension AC (U_{AC}).

14. Procédé selon l'une des revendications 8 à 13,
**caractérisé en ce que**
la fréquence de la modulation PWM et la fréquence du cadencement de la correction du facteur de puissance sont déterminées de façon à ce que la fréquence de la modulation PWM corresponde à la fréquence de la boucle de régulation de la correction du facteur de puissance et/ou la fréquence de la modulation PWM et la fréquence de la boucle de régulation de la correction du facteur de puissance se trouvent à au moins 20 Hz des multiples entiers de la fréquence de la tension AC (U_{AC}).

15. Procédé selon l'une des revendications 8 à 14,
**caractérisé en ce que**
une détection d'une tension AC (U_{AC}) et d'une tension DC (U_{DC}) est effectuée et
un fonctionnement normal et un fonctionnement d'urgence sont ainsi différenciés.
